# EUROPEAN PATENT APPLICATION

(11) **EP 4 309 951 A1**
(43) Date of publication of application: **24.01.2024**
(21) Application number: 22827354.6
(22) Date of filing: 02.06.2022
(51) Int. Cl.: B60N 2/42, B60N 2/75, B60R 21/08, B60R 21/0134

(54) **CONTROL SYSTEM FOR SPINE SUPPORT OF CAR SEAT, CONTROL METHOD, AND CAR SEAT**

(30) Priority: 25.06.2021 CN 202110709134
(71) Applicant: Yanfeng International Automotive Technology Co., Ltd., Shanghai 201306 (CN)
(72) Inventor: LIU, Chongqing, Shanghai 201306 (CN)
(74) Representative: Colombo, Stefano Paolo
(86) International application number: PCT/CN2022/096806
(87) International publication number: WO 2022/267857

(57) **Abstract**

The present invention relates to a control system for a spine support of an automobile seat, a control method and an automobile seat. The control system comprises: a support body (1), which is configured to be movably connected to a backrest of the automobile seat (4); a detection part; an information prompting part, which is electrically connected with the detection part, wherein the detection part is configured to detect the automobile seat and to send out a signal to the information prompting part, so that the information prompting part prompts the occupant to abut the support body against an armpit of the occupant. Preferably, the detection part is configured to detect an inclination angle of a backrest of the automobile seat and to send out a corresponding electric signal to the information prompting part, wherein the information prompting part prompts the occupant to abut the support body against the armpit after it receives the signal. When a vehicle has a front collision or a side collision, the control system can improve a movement posture of the occupant, reduce the pressure on the spine and improve the safety of the occupant.

## Description

### Technical Field

The present invention relates to a control system for a spine support of an automobile seat, a control method for a spine support of an automobile seat, and an automobile seat.

### Background of Invention

At present, in the relevant technical field, a backrest of an automobile seat is adjustable according to a sitting habit of an occupant in a normal use of the automobile seat. According to the known safety test regulations, a backrest may be adjusted to a design state where the backrest has an inclination angle of about 25° relative to a vertical direction, wherein a collision test may be conducted by means of a dummy, wherein the damage of the dummy is evaluated. In an actual use of an automobile seat, in an actual collision process, a seat backrest may not be adjusted to a design state. For example, in a collision process, an occupant may be fully lying or semi lying on the seat, wherein the occupant's spine may be injured due to a high pressure thereon.

Generally, sitting postures may be classified into three types: 1) a normal sitting posture, 2) a working posture, and 3) a leisure posture. Specifically, in the normal sitting posture, an occupant can fully pay attention to the driving situation of the vehicle. The design state of the backrest is generally about 25°. In the working posture, an occupant can work or entertain in the vehicle and doesn't pay attention to the driving situation of the vehicle, wherein the backrest can be adjusted to about 45° relative to a vertical direction. In the leisure posture, an occupant can completely ignore the driving of the vehicle, close the eyes and rest, wherein the backrest can be adjusted to 60° or even more relative to a vertical direction.

In the working or leisure posture (a semi lying or full lying posture), the trunk of an occupant slides down along the backrest of the automobile seat due to inertia when the vehicle has a front collision, and a seat basin of the automobile seat supports the occupant. At the same time, a waist belt portion of a safety belt for the automobile seat constrains the pelvis of the occupant, which may lead to an approach movement and squeeze between the upper trunk and the pelvis of the occupant. Research and experiments show that such a situation may lead to an incurable and even life-threatening injury due to the squeeze of the spine.

With the development of the automobile intelligence and the automatic driving or unmanned driving technology, an automatic control system is expected, which can realize the protection for a spine of an occupant in a collision event of an automobile.

### Summary of Invention

An object of the present invention is to provide a control system for a spine support of an automobile seat, a control method for a spine support of an automobile seat, and an automobile seat, wherein a defect of protection for a spine of an occupant in an automobile seat in the prior art in a collision event may be eliminated.

The present invention achieves the object through the following technical solution:
A control system for a spine support of an automobile seat, characterized in that, the control system comprises: - a support body, which is configured to be movably connected to the automobile seat; - a detection part; and - an information prompting part, wherein the information prompting part is electrically connected with the detection part, wherein the detection part is configured to detect the automobile seat and to send out a signal to the information prompting part, so as to enable that the information prompting part prompts an occupant to abut the support body against an armpit of the occupant.

In this technical solution, by means of the above-mentioned structural measurements, the support body of the control system can be lifted up or turned up to support the armpit of the occupant in a normal sitting posture, so as to reduce the pressure on the spine. When the occupant is in a working posture (semi lying) or in a leisure posture (full lying) in the vehicle, the support body can provide an additional restraint for the occupant along the backrest of the seat, wherein by means of the support under the armpit the pressure on the spine can be reduced and the driving comfort can be improved. When the vehicle has a front collision or a side collision, the support body can improve a movement posture of the occupant, reduce the pressure on the spine and improve the safety of the occupant.

In some embodiments, the detection part of the control system is configured to detect an inclination angle of a backrest of the automobile seat and to send a corresponding electric signal to the information prompting part, wherein the information prompting part prompts the occupant to abut the support body against the armpit after the information prompting part receives the signal. When the vehicle has a front collision or a side collision, the control system can improve a movement posture of the occupant, reduce the pressure on the spine and improve the safety of the occupant.

Preferably, the detection part is configured to detect an included angle between a backrest of the automobile seat and a vertical direction, and to send out the signal to the information prompting part when the included angle is greater than a predetermined threshold.

In this technical solution, by means of the above-mentioned structural measurements, when the detection part detects that the included angle between the backrest of the automobile seat and the vertical direction is too large, the detection part sends the electric signal to the information prompting part, and then the information prompting part prompts the occupant to abut the support body against the armpit, which is beneficial to the protection of the occupant.

Preferably, the detection part is configured to detect whether the support body abuts against the armpit of the occupant, and to send out the signal to the information prompting part when the support body isn't abutted against the armpit.

In this technical solution, by means of the above-mentioned structural measurements, the detection part detects whether the support body abuts against the armpit of the occupant. If the occupant abuts the support body against the armpit after the information prompting part sends out the prompting information, the information prompting part stops the prompting information. If the detection part detects that the occupant doesn't abut the support body against the armpit after the information prompting part sends out the prompting information, the detection part sends a corresponding signal to the information prompting part for repeatedly reminding the occupant to abut the support body against the armpit.

Preferably, the control system further comprises a driving mechanism, which is connected to the support body and is configured to drive the support body, so that the support body extends from the automobile seat to the armpit of the occupant and supports the armpit of the occupant.

In this technical solution, by means of the above-mentioned structural measurements, the occupant can drive the support body by controlling the driving mechanism, so that the support body extends from the automobile seat to the armpit of the occupant and supports the armpit of the occupant. In addition, the driving mechanism can also drive the support body to move up and down on the backrest of the seat, so as to adjust a distance between the support body and the armpit of the occupant, which is beneficial to a more comfortable supporting effect for the occupant and meets the supporting requirements for the occupants with different statures.

Preferably, the detection part is electrically connected to the driving mechanism and is configured to control the ON or OFF of the driving mechanism.

In other embodiments, the detection part is electrically connected with the driving mechanism. When the detection part detects that an inclination angle of the backrest is too large, or when the occupant doesn't abut the support body against the armpit after the information prompting part sends out the prompting information, the detection part sends a corresponding electric signal to the driving mechanism and turns it on (activates it), wherein the driving mechanism automatically drives the support body to move it to the armpit of the occupant. In addition, when the detection part detects that the support body is moved to a proper position, the detection part sends a corresponding electric signal to the driving mechanism and turns it off (deactivates it), so as to prevent the support body from an excessive movement causing a discomfort to the armpit of the occupant.

Preferably, the control system further comprises a pressure detection part and a locking part, wherein the pressure detection part is configured to detect a force value on the support body, and the pressure detection part is electrically connected to the locking part. The pressure detection part compares the detected force value with a set value stored in the pressure detection part. The pressure detection part is configured to turn off (deactivate) the locking part so as to unlock the locking part, when the force value is greater than or equal to the set value, and thus the support body is movable on the automobile seat. The pressure detection part is configured to turn on (activate) the locking part, so as to lock the locking part and thus lock and fix the support body to the automobile seat, when the force value is lower than the set value.

In this technical solution, by means of the above-mentioned structural measurements, the locking mechanism can position the support body, so that the support body doesn't slide down when it bears a certain load in a supporting state, wherein the occupant obtains a certain supporting force in the usage of the support body, and meanwhile, the pressure detection part effectively prevents that the supporting force provided by the support body to the occupant is greater than the range that the occupant can bear, and thus the occupant can be protected.

Preferably, the support body is configured to be connected with a backrest of the automobile seat with one end of the support body, wherein the support body extends from the backrest of the automobile seat to an armpit of an occupant and supports the armpit of the occupant in an operating state of the support body.

Preferably, the control system further comprises an adjustment part, which comprises an adjustment body and an adjustment track, wherein the adjustment track is configured to be connected with a backrest of the automobile seat, wherein the adjustment body is slidably connected with the adjustment track, wherein the one end of the support body is fixedly connected with the adjustment body.

Preferably, the number of the support bodies is two, wherein the two support bodies are a first and a second support body. In a width direction of the automobile seat, the first support body is configured to be connected with one side of a backrest of the automobile seat, and the second support body is configured to be connected with the other side of the backrest of the automobile seat. The first and the second support body are configured to extend to the respective armpits of the occupant and to support the respective armpits of the occupant.

Preferably, the support body is configured to be movably connected with a backrest of the automobile seat and has a first state and a second state,
- in the first state, a protruding end of the support body extends from the backrest of the automobile seat to the armpit of the occupant and supports the armpit of the occupant, and
- in the second state, the protruding end of the support body is retracted from the armpit of the occupant.

Preferably, the support body can be folded and can be turned up from a folded state, wherein in a turned-up state, the support body extends from a backrest of the automobile seat to the armpit of the occupant and supports the armpit of the occupant.

An automobile seat, characterized in that, the automobile seat comprises the control system for a spine support of an automobile seat.

In this technical solution, by means of the above-mentioned structural measurements, the automobile seat is equipped with the control system for a spine support. When the vehicle has a front collision, especially in the case where an angle of a backrest relative to a vertical direction is relatively large, such as in a working posture or in a leisure posture, the occupant can slide down along the backrest under the action of an inertial force, wherein the support body under the armpit supports the occupant in the sliding process of the occupant. In some embodiments, when the pressure on the support body exceeds a set value, the support body can be plastically deformed or can descend against a damping force, wherein the inertial force of the upper torso of the occupant is absorbed and the pressure on the spine of the occupant is reduced. In some embodiments, similarly, in the event of a side collision of the vehicle, the support body can maintain the posture of the upper torso of the occupant, wherein an injury caused by a secondary collision can be reduced by the cooperation of the support body with a side airbag, a distal airbag or an air curtain.

A control method for a spine support of an automobile seat, characterized in that, the control method utilizes the control system for a spine support of an automobile seat, wherein the control method comprises the following steps: - the detection part detects the automobile seat and sends out a signal, - the information prompting part receives the signal and prompts the occupant to abut the support body against an armpit of the occupant.

Preferably, the step "the detection part detects the automobile seat and sends out a signal" comprises: the detection part detects an included angle between a backrest of the automobile seat and a vertical direction, and sends out the signal to the information prompting part when the included angle is greater than a predetermined threshold; and/or the detection part detects whether the support body abuts against the armpit of the occupant, and sends out the signal to the information prompting part when the occupant doesn't abut the support body against the armpit.

Preferably, the control method comprises: detecting whether the automobile seat is occupied by an occupant, prior to the step "the detection part detects the automobile seat and sends out a signal".

Preferably, the control method further comprises: judging whether the occupant wears a safety belt, prior to the step "the detection part detects the automobile seat and sends out a signal" and after the step "detecting whether the automobile seat is occupied by an occupant".

When the detection part detects that the automobile seat is occupied by an occupant, the detection part further detects whether the occupant wears a safety belt. When the occupant doesn't wear the safety belt, the detection part can send out a signal to the information prompting part, and then the information prompting part can send a message to remind the occupant to wear the safety belt. When the occupant wears the safety belt, the detection part further detects an inclination angle of a backrest of the automobile seat. When the inclination angle of the backrest of the automobile seat exceeds a set value, the detection part can send out a signal to the information prompting part, and then the information prompting part can prompt the occupant to abut the support body against the armpit. When the detection part detects that the support body abuts against the armpit of the occupant, it sends out a signal to the information prompting part to stop the prompting information. When the detection part detects that the support body doesn't abut against the armpit of the occupant, the detection part can send out a signal to the information prompting part, and then the information prompting part can repeatedly prompt the occupant to abut the support body against the armpit.

The above-mentioned preferrable measurements can be arbitrarily combined to form preferrable embodiments of the present invention under consideration of the general common knowledge in the art.

In some embodiments, the present invention may have the following positive effects:
The detection part of the control system is configured to detect an inclination angle of the backrest of the automobile seat and to send a corresponding electric signal to the information prompting part. Then, the information prompting part prompts the occupant to abut the support body against the armpit after the information prompting part receives the signal. When the vehicle has a front collision or a side collision, the control system can improve a movement posture of the occupant, reduce the pressure on the spine and improve the safety of the occupant.

### Brief Description of Drawings

Fig. 1 is a schematic view of an automobile seat according to an embodiment of the present invention when an occupant is in a leisure posture.
Fig. 2 is a schematic view of the automobile seat according to the embodiment of the present invention when an occupant is in the leisure posture, wherein the fact that the support body is adjustable up and down along a backrest is shown in a schematic view.
Fig. 3 is a schematic view of a support body according to an embodiment of the present invention when it is supported under an armpit of an occupant.
Fig. 4 is a schematic diagram of a control method for a spine support of an automobile seat according to an embodiment of the present invention.
Fig. 5 is a block diagram of a control system for a spine support of an automobile seat according to an embodiment of the present invention.

### Detailed Description of Drawings

The present invention is explained more clearly and completely by means of embodiments with references to the accompanying drawings, while the present invention isn't limited to the scope of the embodiments.

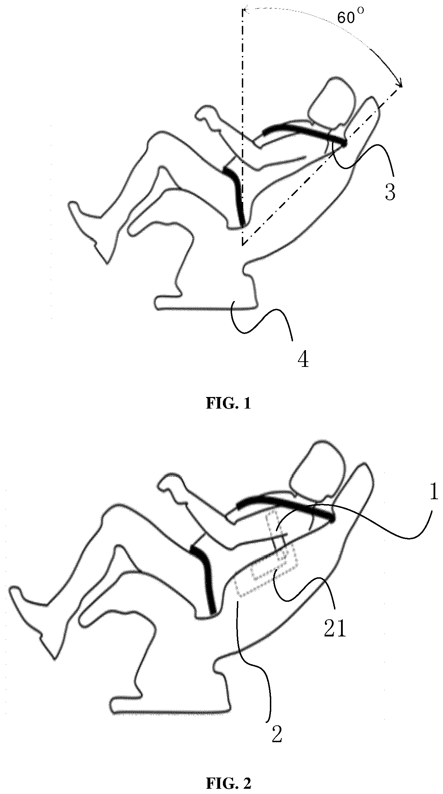

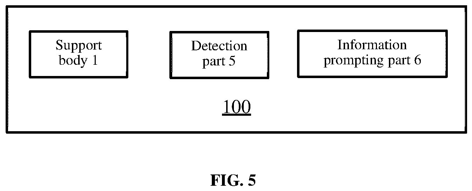

An embodiment of the present invention provides a control system 100 for a spine support of an automobile seat 4. As shown in Figs. 2, 3 and 5, the control system comprises: - a support body 1, which is movably connected with the automobile seat 4; - a detection part 5, - an information prompting part 6, which is electrically connected with the detection part 5, wherein the detection part 5 is configured to detect the automobile seat 4 and to send out a signal to the information prompting part, so as to enable that the information prompting part 6 prompts the occupant to abut the support body 1 against an armpit of the occupant.

By means of the above-mentioned measurements, one end of the support body 1 of the control system is a fixed end, wherein the fixed end of the support body 1 is mounted in an adjustment part 2 of the automobile seat 4, wherein the adjustment part 2 comprises an adjustment body and an adjustment track 21. The one end of the support body 1 is fixedly connected with the adjustment body, so that the adjustment body together with the support body 1 slides on the adjustment track 21. The other end of the support body 1 is a movable end, so that the support body 1 can move relative to the automobile seat 4. When two support bodies 1 are in an inactive state, the two support bodies 1 can be folded at two sides of the automobile seat 4 (in a width direction of the automobile seat) and thus don't affect the activities of the occupant in the automobile. When the support bodies 1 are in an active state, the occupant extends the support bodies 1 from the two sides of the automobile seat 4 to the two armpits of the occupant by adjusting the movable ends of the support bodies 1, wherein the positions of the support bodies can be adjusted according to the stature of the occupant. The control system further comprises a detection part and an information prompting part, wherein the information prompting part is electrically connected with the detection part. The detection part is configured to detect an inclination angle of a backrest of the automobile seat 4 and to send out a corresponding electric signal to the information prompting part. After receiving the signal, the information prompting part prompts the occupant to abut the support bodies 1 against the armpits. In a normal sitting posture, the support bodies 1 of the control system can be lifted up or turned up to support the armpits of the occupant, so as to reduce the pressure on the spine. When the occupant in the automobile is in a working posture (semi lying) or in a leisure posture (full lying), the support bodies 1 can provide an addition restraint to the occupant along the backrest of the seat, wherein by means of the support under the armpits the pressure on the spine can be reduced and the driving comfort can be improved. When the vehicle has a front collision or a side collision, the support bodies 1 can improve a movement posture of the occupant, reduce the pressure on the spine and improve the safety of the occupant. The control system can prompt the occupant timely, which is beneficial to further reduction of the risk of an injury of the spine of the occupant.

In a preferable embodiment, the detection part is configured to detect an included angle between a backrest of the automobile seat 4 and a vertical direction, and to send out the signal to the information prompting part.

The detection part may comprise a sensor for detecting an angle of the backrest. Additionally or alternatively, the detection part may comprise an image recognition system configured to recognize the angle of the backrest from the image of the automobile seat. Additionally or alternatively, the detection part may be configured to receive data from a vehicle controller, such as the angle of the backrest and/or a wearing state of a safety belt and/or an occupied state of the automobile seat.

The information prompting part may comprise a text and/or voice and/or graphic prompting device.

According to an actual situation, the occupant's sitting postures can be generally classified into three types, namely a normal sitting posture, a working posture and a leisure posture. In the normal sitting posture, an occupant can pay full attention to the driving situation of the vehicle. A design state of the backrest is generally about 25° relative to a vertical direction. In the working posture, the occupant can work or entertain in the vehicle and doesn't pay attention to the driving situation of the vehicle, wherein the backrest can be adjusted to about 45° relative to the vertical direction. In the leisure posture, the occupant can completely ignore the driving of the vehicle, close the eyes and rest, wherein the backrest can be adjusted to 60° or more relative to the vertical direction. In order to ensure the safety of the occupant during the driving of the automobile, for example, when the detection part detects that the included angle between the backrest of the automobile seat 4 and the vertical direction is greater than 25°, the detection part sends out an electric signal to the information prompting part to prompt the occupant to abut the support bodies 1 against the armpits, which is beneficial to the protection of the occupant.

In a preferable embodiment, the detection part is configured to detect whether the support bodies 1 abut against the armpits of the occupant, and to send out the signal to the information prompting part.

For example, when the detection part detects that the included angle between the backrest of the automobile seat 4 and the vertical direction is greater than 25°, the detection part sends out an electric signal to the information prompting part to prompt the occupant to abut the support bodies 1 against the armpits. Then, the detection part can detect whether the support bodies 1 abut against the armpits of the occupant. If the occupant abuts the support bodies 1 against the armpits after the information prompting part sends out the prompting information, the information prompting part stops the prompting information. If the detection part detects that the occupant doesn't abut the support bodies 1 against the armpits after the occupant is prompted by the information prompting part, the detection part can send out a corresponding signal to the information prompting part for repeatedly reminding the occupant to abut the support bodies 1 against the armpits.

In a preferable embodiment, the control system further comprises a driving mechanism, which is connected to the support bodies 1 and is configured to drive the support bodies 1, so that the support bodies 1 extend from the automobile seat 4 to the armpits of the occupant and support the armpits of the occupant.

The control system further comprises the driving mechanism, which is an electric component and is connected with the support bodies 1. When an occupant wants to abut the support bodies 1 against the armpits, the occupant can drive the support bodies 1 by controlling the driving mechanism, so that the movable ends of the support bodies 1 move out of the folded position, and thus the support bodies extend from the automobile seat 4 to the armpits of the occupant and support the armpits of the occupant. In addition, the driving mechanism can also drive the support bodies 1 to move up and down on the backrest of the seat, so as to adjust a distance between the support bodies 1 and the armpits of the occupant, which is beneficial to a more comfortable supporting effect for the occupant and meets the supporting requirements for occupants with different statures.

In other embodiments, the driving mechanism may also comprise a manual mechanical structure, wherein the distances between the support bodies 1 and the armpits of the occupant can be adjusted manually, so that the influence of a possible electronic failure on the adjustment process of the support bodies 1 can be avoided.

In a preferable embodiment, the detection part is electrically connected to the driving mechanism and is configured to control the ON or OFF of the driving mechanism.

In other embodiments, the detection part is electrically connected with the driving mechanism. When the detection part detects that an inclination angle of a backrest is too large, or when the occupant doesn't abut the support bodies 1 against the armpits after the information prompting part sends out the prompting information, the detection part can send out a corresponding electric signal to the driving mechanism and turn it on (activate it), wherein the driving mechanism can automatically drive the support bodies 1 to move them to the armpits of the occupant. In addition, when the detection part detects that the support bodies 1 are moved to a proper position, the detection part can send out a corresponding electric signal to the driving mechanism and turn it off (deactivate it), so as to prevent an excessive movement of the support bodies 1 causing discomfort to the armpits of the occupant.

In a preferable embodiment, the control system further comprises a pressure detection part and a locking part, wherein the pressure detection part is configured to detect a force on the support body 1, and wherein the pressure detection part is electrically connected to the locking part. The pressure detection part is configured to detect a force value on the support body 1 and compare the detected force value with a set value stored in the pressure detection part. When the force value is greater than or equal to the set value, the pressure detection part is configured to turn off (deactivate) the locking part, so as to unlock the locking part and thus the support body 1 is movable on the automobile seat 4. When the force value is lower than the set value, the pressure detection part is configured to turn on (activate) the locking part to lock the locking part and thus lock and fix the support body 1 to the automobile seat 4.

In other embodiments, the control system further comprises a pressure detection part and a locking part. When the occupant abuts the support body 1 against the armpit and adjusts the support body vertically to a proper position, the locking part is locked to position the support body 1. The pressure detection part is configured to detect a force on the support body 1, and the pressure detection part is electrically connected to the locking part. When the vehicle has a collision, the occupant slides down along the backrest due to an inertia force in an inclined state. In such sliding process of the occupant, the pressure detection part detects a force value on the support body 1 in real time and compares the detected force value with a set value stored in the pressure detection part. When the force value on the support body 1 is greater than or equal to the set value of the pressure detection part, the pressure detection part turns off (unlocks) the locking part to allow a movement of the support body 1 on the automobile seat 4. When the force value on the support body 1 is lower than the set value of the pressure detection part, the pressure detection part keeps the locking part in a locked state, so as to lock and fix the support body 1 to the automobile seat 4. The locking mechanism has a positioning function for the support body 1, so that the support body 1 can't slide down when it bears a certain load in a supporting state, and the occupant can be supported in the usage of the support body. In addition, the pressure detection part effectively prevents that the supporting force provided by the support body 1 to the occupant is greater than the range that the occupant can bear, and thus the occupant is protected.

An embodiment of the present invention provides an automobile seat 4. As shown in Figs. 1-3, the automobile seat 4 comprises the control system for a spine support of an automobile seat 4.

The control system for a spine support is applied to the automobile seat 4. When the vehicle has a front collision, especially in the case where the angle of the backrest relative to the vertical direction is relatively large, such as in a working posture or in a leisure posture, the occupant slides down along the backrest under the action of an inertial force, and the support body 1 under the armpit provides a supporting force for the occupant in the sliding process of the occupant. In some embodiments, when the pressure on the support body 1 exceeds a set value, the support body 1 can be plastically deformed or descend under a damping force, so as to absorb the inertial force on the upper torso of the occupant and reduce the pressure on the spine of the occupant. In some embodiments, similarly, in the event of a side collision of a vehicle, the support body 1 can maintain the posture of the upper torso, and can reduce an injury caused by a secondary collision through cooperation of the support body with a side airbag, a distal airbag or an air curtain.

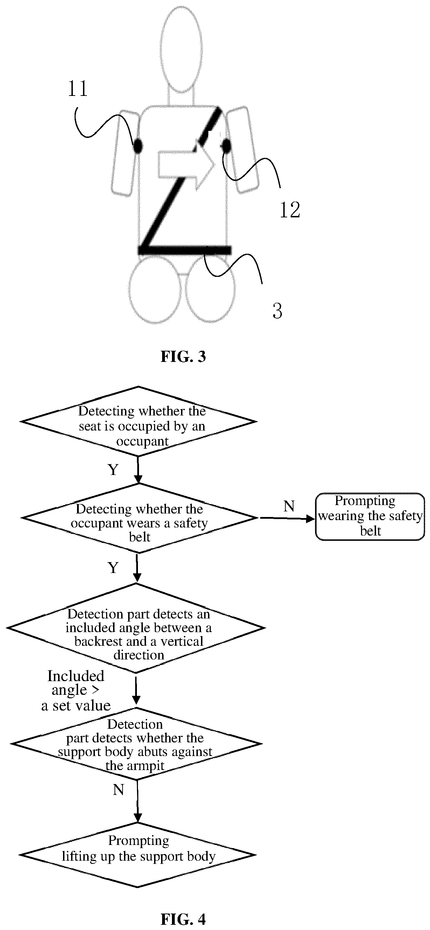

An embodiment of the present invention provides a control method for a spine support of an automobile seat 4. As shown in Fig. 4, the control method utilizes the control system for a spine support of an automobile seat 4. The control method comprises the following steps: the detection part detects the automobile seat 4 and sends out a signal; the information prompting part receives the signal and prompts the occupant to abut the support body against the armpit of the occupant. The step "the detection part detects the automobile seat 4 and sends out a signal" may further comprise: the detection part detects an included angle between a backrest of the automobile seat 4 and a vertical direction, and sends out the signal to the information prompting part when the included angle is greater than a predetermined threshold; and/or, the detection part detects whether the support body 1 abuts against the armpit of the occupant, and sends out the signal to the information prompting part when the support body doesn't abut against the armpit.

When the automobile seat 4 is occupied by an occupant, the detection part can detect an inclination angle of a backrest of the automobile seat 4 in real time. When the inclination angle of the backrest of the automobile seat 4 is too large, the detection part can send out the signal to the information prompting part, and then the information prompting part can send a message to remind the occupant to abut the support body 1 against the armpit. After the information prompting part sends the prompting information, the detection part can detect whether the occupant abuts the support body 1 against the armpit. When the detection part detects that the support body 1 abuts against the armpit of the occupant, it sends out the signal to the information prompting part to stop the prompting information. When the detection part detects that the support body 1 doesn't abut against the armpit of the occupant, the detection part can send out the signal to the information prompting part, and then the information prompting part can prompt the occupant to abut the support body against the armpit again.

In a preferable embodiment, as shown in Fig. 4, the control method further comprises: detecting whether the automobile seat 4 is occupied by an occupant, prior to the step "the detection part detects the automobile seat 4 and sends out a signal".

Prior to the detection of the inclination angle of the backrest of the automobile seat 4, the detection part can detect whether the automobile seat 4 is occupied by an occupant. If the detection part detects that the automobile seat 4 is occupied by an occupant, and meanwhile the inclination angle of the backrest is greater than the set value, the detection part sends out the signal to the information prompting part, and then the information prompting part sends a message to remind the occupant to abut the support body 1 against the armpit.

In a preferable embodiment, as shown in Fig. 4, the control method further comprises: judging whether the occupant wears a safety belt, prior to the step "the detection part detects the automobile seat 4 and sends out a signal" and after the step "detecting whether the automobile seat 4 is occupied by an occupant.

When the detection part detects that the automobile seat 4 is occupied by an occupant, the detection part can further detect whether the occupant wears a safety belt. When the occupant doesn't wear the safety belt, the detection part can send out a signal to the information prompting part, and then the information prompting part can send a message to remind the occupant to wear the safety belt. When the occupant wears the safety belt, the detection part can detect the inclination angle of the backrest of the automobile seat 4. If the inclination angle of the backrest of the automobile seat 4 exceeds a set value, the detection part can send out a signal to the information prompting part, and then the information prompting part can prompt the occupant to abut the support body 1 against the armpit. If the detection part detects that the support body 1 abuts against the armpit of the occupant, it sends out a signal to the information prompting part to stop the prompting information. If the detection part detects that the support body 1 doesn't abut against the armpit of the occupant, the detection part can send out a signal to the information prompting part, and then the information prompting part can repeatedly prompt the occupant to abut the support body against the armpit.

Although the specific embodiments of the present invention have been described above, those skilled in the art will understand that these embodiments are only examples, and the protection scope of the present invention is defined by the claims. Those skilled in the art can make many changes or modifications to these embodiments without departing from the principle and essence of the present invention, and all of these changes and modifications fall into the protection scope of the present invention.

### Term lists:

- 1: support body
- 11: first Support body
- 12: second support body
- 2: regulation part
- 21: adjustment track
- 3: safety belt
- 4: automobile seat
- 5: detection part
- 6: information prompting part
- 100: control system

## Claims

1. A control system for a spine support of an automobile seat, **characterized in that**, the control system comprises:
- a support body, which is configured to be movably connected to the automobile seat,
- a detection part, and
- an information prompting part, which is electrically connected with the detection part,
wherein the detection part is configured to detect the automobile seat and to send out a signal to the information prompting part, so that the information prompting part prompts the occupant to abut the support body against an armpit of the occupant.

2. The control system for a spine support of an automobile seat as recited in claim 1, **characterized in that**, the detection part is configured to detect an included angle between a backrest of the automobile seat and a vertical direction, and to send out the signal to the information prompting part when the included angle is greater than a predetermined threshold.

3. The control system for a spine support of an automobile seat as recited in claim 1, **characterized in that**, the detection part is configured to detect whether the support body abuts against the armpit of the occupant, and to send out the signal to the information prompting part when the support body doesn't abut against the armpit.

4. The control system for a spine support of an automobile seat as recited in claim 1, **characterized in that**, the control system further comprises a driving mechanism, which is connected to the support body and is configured to drive the support body, so that the support body extends from the automobile seat to the armpit of the occupant and supports the armpit of the occupant.

5. The control system for a spine support of an automobile seat as recited in claim 4, **characterized in that**, the detection part is electrically connected to the driving mechanism and is configured to control the ON or OFF of the driving mechanism.

6. The control system for a spine support of an automobile seat as recited in claim 1, **characterized in that**, the control system further comprises a pressure detection part and a locking part,
wherein the pressure detection part is configured to detect a force value on the support body, and the pressure detection part is electrically connected with the locking part,
wherein the pressure detection part is configured to compare the detected force value with a set value stored in the pressure detection part, and the pressure detection part is configured to unlock the locking part to enable a movement of the support body on the automobile seat when the force value is greater than or equal to the set value,
wherein the pressure detection part is configured to lock the locking part to lock and fix the support body to the automobile seat when the force value is lower than the set value.

7. The control system for a spine support of an automobile seat as recited in claim 1, **characterized in that**, the support body is configured to be connected with a backrest of the automobile seat at its one end, wherein the support body in an operating state extends from the backrest of the automobile seat to the armpit of the occupant and supports the armpit of the occupant.

8. The control system for a spine support of an automobile seat as recited in claim 1, **characterized in that**, the control system further comprises an adjustment part, which comprises an adjustment body and an adjustment track, wherein the adjustment track is configured to be connected with a backrest of the automobile seat, wherein the adjustment body is slidably connected with the adjustment track, wherein one end of the support body is fixedly connected with the adjustment body.

9. The control system for a spine support of an automobile seat as recited in claim 1, **characterized in that**, the number of the supporting bodies is two, wherein the two supporting bodies are a first and a second support body, wherein the first support body is configured to be connected with one side of a backrest of the automobile seat and the second support body is configured to be connected with the other side of the backrest of the automobile seat in a width direction of the automobile seat.

10. The control system for spine support of an automobile seat as recited in claim 1, **characterized in that**, the support body is configured to be movably connected to a backrest of the automobile seat and has a first state and a second state,
wherein in the first state, a protruding end of the support body extends from the backrest of the automobile seat to the armpit of the occupant and supports the armpit of the occupant,
wherein in the second state, the protruding end of the support body is retracted from the armpit of the occupant.

11. The spine support device for an automobile seat as recited in claim 10, **characterized in that**, the support body is foldable and can be turned up from a folded state, wherein in a turned-up state the support body extends from the backrest of the automobile seat to the armpit of the occupant and supports the armpit of the occupant.

12. An automobile seat, **characterized in that**, the automobile seat comprises the control system for a spine support of an automobile seat as recited in any one of claims 1 to 11.

13. A control method for a spine support of an automobile seat, **characterized in that**, the control method utilizes the control system for a spine support of an automobile seat as recited in any one of claims 1 to 11, wherein the control method comprises the following steps:
the detection part detects the automobile seat and sends out a signal; and
the information prompting part receives the signal and prompts the occupant to abut the support body against an armpit of the occupant.

14. The control method for a spine support of an automobile seat as recited in claim 13, **characterized in that**, the step "the detection part detects the automobile seat and sends out a signal" comprises:
the detection part detects an included angle between a backrest of the automobile seat and a vertical direction, and sends out the signal to the information prompting part when the included angle is greater than a predetermined threshold, and/or
the detection part detects whether the support body abuts against the armpit of the occupant, and sends out the signal to the information prompting part when the support body doesn't abut against the armpit.

15. The control method for a spine support of an automobile seat as recited in claim 14, **characterized in that**, prior to the step "the detection part detects the automobile seat and sends out a signal", the control method comprises:
detecting whether the automobile seat is occupied by an occupant.

16. The control method for the spine support of an automobile seat as recited in claim 15, **characterized in that**, prior to the step "the detection part detects the automobile seat and sends out a signal" and after the step "detecting whether the automobile seat is occupied by an occupant", the control method further comprises:
determining whether the occupant wears a safety belt.
